# EUROPÄISCHE PATENTSCHRIFT

(11) **EP 1 595 034 B1**
(45) Veröffentlichungstag und Bekanntmachung des Hinweises auf die Patenterteilung: **16.05.2007**
(21) Anmeldenummer: 03788836.9
(22) Anmeldetag: 02.12.2003
(51) Int. Cl.: E02F 9/18, E02F 3/76

(54) **HINTERRAHMEN FÜR GRADER**
REAR CHASSIS FOR A GRADER
CHASSIS ARRIERE POUR NIVELEUSE

(30) Priorität: 18.12.2002 DE 10259183
(43) Veröffentlichungstag der Anmeldung: 16.11.2005
(73) Patentinhaber: CNH Baumaschinen GmbH, 13581 Berlin (DE)
(72) Erfinder: DAMM, Jürgen, 13591 Berlin (DE); SCHWARTZ, Harald, 14476 Fahrland (DE)
(74) Vertreter: Meinke, Dabringhaus und Partner GbR
(86) Internationale Anmeldenummer: PCT/DE2003/003964
(87) Internationale Veröffentlichungsnummer: WO 2004/057116

(56) Entgegenhaltungen:
- US-A- 3 639 748
- US-A- 4 213 507
- US-A- 4 580 811
- PATENT ABSTRACTS OF JAPAN vol. 1998, no. 12, 31. Oktober 1998 (1998-10-31) -& JP 10 183687 A (KANZAKI KOKYUKOKI MFG CO LTD), 14. Juli 1998 (1998-07-14)

## Beschreibung

Die Erfindung betrifft einen Grader mit Hinterrahmen, an dessen hinteren Ende die Baugruppen hinteres Gegengewicht, Beleuchtung, Stoßfänger, mit oder ohne hintere Ausrüstung angeordnet sind.

Bei den sich heute im Einsatz befindenden Gradern aus der Produktion der Anmelderin der Typen "F 106.5" und "F 156" nach den Prospekten mit den Druckvermerken "E 575.0/2-0101" bzw. "E 578.1/1-0201" ist deren rückwärtige Beleuchtung seitlich am Hinterrahmen angeschraubt. Das bei Gradern wegen einer optimalen Achslastverteilung zwischen der Vorderachse und der hinteren Tandemachse notwendige hintere Gegengewicht, das zum Belasten der Tandemachse bei nicht vorhandener hinterer Ausrüstung zwingend erforderlich ist, wird von unten in den Hinterrahmen hineingehoben und an diesem mit mehreren Schrauben befestigt. Der Stoßfänger wird von einem starken Abschlussprofil des Hinterrahmens selbst gebildet.

An dieser Bauweise ist einmal zu bemängeln, dass sie aus zu vielen Einzelteilen besteht, was die Gestaltung des Hinterrahmens verkompliziert und deshalb zu hohen Fertigungskosten führt. Zum anderen ist das hintere Gegengewicht durch dessen ungünstig liegenden Anbauort nur schwer montierbar. Außerdem ist von Nachteil, dass der Hinterrahmen durch seine eigentliche Funktion und seine Gestalt zu wenig Möglichkeiten zum Anbau diverser Varianten von hinteren Ausrüstungen bietet, was die Flexibilität für den Einsatz von hinteren Ausrüstungen einschränkt. Schließlich ist ein derart gestalteter Hinterrahmen auch von der optischen Erscheinung nicht gerade vorteilhaft.

Aus JP-A-10183687 ist ein Grader ohne hinteres Anbauteil mit einem kombinierten Stoßfänger-Gegengewicht bekannt. Dieses wird entsprechend der benötigten Lademasse ausgeführt.

US-A-4213507 offenbart einen Grader mit hinten seitlich angebrachten Leuchtenarmen. US-A-3639748 offenbart Stoßfänger mit integrierten Leuchten.

US-A-4580811 offenbart ein Fahrzeugheck eines Fahrzeuges, das ein Arbeitsmittel an der Front trägt. Dabei erstreckt sich ein Gegengewicht nicht über die gesamte Fahrzeugbreite und der Stoßfänger mit Leuchten ist von den mehreren Gegengewichten separiert.

Der Erfindung liegt die Aufgabe zugrunde, die Achslastverteilung eines Graders zu optimieren, wobei der Anbauort für das hintere Gegengewicht aus der Sicht einer einfachen Montage bzw. Demontage günstig liegen soll.

Diese Aufgabe wird mit einem Grader mit den Merkmalen des Patentanspruches 1 gelöst.

Durch die Vereinigung der Funktionen des Stoßfängers und des hinteren Gegengewichtes in einer vertikal ausgerichteten und sich bis zur gesamten Breite des Graders erstreckenden Schlussplatte kommt es zu einer Reduzierung der Anzahl der Einzelteile für den Hinterrahmen. Die Stoßfängerfunktion übernimmt die Schlussplatte durch ihre Anordnung ganz hinten am Hinterrahmen. Ihre große Breite schützt die gesamte Heckpartie des Graders vor Beschädigungen und ihr hohes Gewicht sorgt für die entsprechende Wirksamkeit der Schutzfunktion. Die Integration der Beleuchtung im Bereich der äußeren Enden der Schlussplatte erfordert ebenfalls keine weiteren Teile und bietet außerdem einen sicheren Schutz für die Beleuchtung vor Zerstörung. Die wesentliche Wirkung des erfindungsgemäß ausgestalteten Graders ist das angepasste Gegengewicht entsprechend des Gewichtes des hinteren Anbauteiles.

In einer vorteilhaften Ausgestaltung ist vorgesehen, dass die Schlussplatte einstückig ausgebildet ist, da selbst bei einer zweistückigen Ausbildung bei deren Montage bzw. Demontage ohnehin ein Hebezeug eingesetzt werden muss.

Ferner ist vorteilhaft vorgesehen, dass zur Erhöhung der Stabilität des Hinterrahmens die hinteren Enden des linken Längsträgers und des rechten Längsträgers mit einem hinteren Querträger verbunden sind.

Bevorzugt ist vorgesehen, dass die Schlussplatte am hinteren Querträger lösbar befestigt ist, was beispielsweise durch stabile Schraubverbindungen verwirklicht werden kann.

Zusammenfassend stellen sich damit die Vorteile der Erfindung so dar, dass durch die geringe Zahl von Einzelteilen die Fertigungskosten relativ niedrig liegen. Durch die Lage der Schlussplatte am nach hinten freien Ende des Hinterrahmens kann sie auch sehr einfach montiert bzw. demontiert werden. Die großflächige Gestalt der Schlussplatte bietet technisch einfach mehr Möglichkeiten zum Anbau mehrerer hinterer Ausrüstungen, wodurch sich hierfür die Flexibilität erhöht. Schließlich bietet dieser klar und einfach gegliederte Aufbau dieses Hinterrahmens auch ein ansprechendes Erscheinungsbild.

Die Erfindung soll nun anhand von zwei Ausführungsbeispielen näher erläutert werden, wobei die einzelnen Figuren zeigen:
- Fig. 1: eine perspektivische Ansicht auf die linke hintere Seite eines Graders mit Heckaufreißer,
- Fig. 2:: einen Hinterrahmen des Graders nach Fig. 1
- Fig. 3:: eine Rückansicht auf den Grader nach Fig. 1 mit Heckaufreißer und einem vergrößerten Schnitt durch die Schlußplatte
- Fig. 4:: eine Rückansicht auf einen Grader ohne hintere Ausrüstung mit einer Schlußplatte großer Wandstärke und einem vergrößerten Schnitt durch die Schlußplatte.

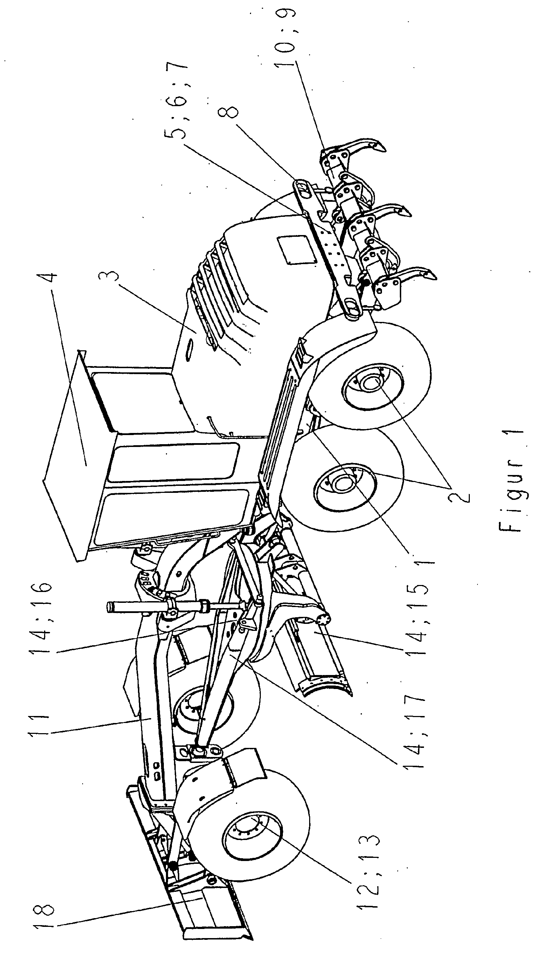

In Figur 1 ist ein kompletter Grader gezeigt, dessen Fahrzeugteil im wesentlichen aus einer am Hinterrahmen 1 befestigten Tandemachse 2, einem Motorraum 3 mit Motor, einer Fahrerkabine 4 und einer zum Hinterrahmen 1 gehörenden Schlußplatte 5 besteht. Diese Schlußplatte 5 ist gleichzeitig hinteres Gegengewicht 6, Stoßfänger 7 sowie Anbringungsort der Beleuchtung 8 für den Grader. In diesem Ausführungsbeispiel ist am Hinterrahmen 1 noch ein sogenannter Heckaufreißer 9 angebracht, der das am häufigsten vorkommende Teil einer hinteren Ausrüstung 10 darstellt, wozu beispielsweise auch eine hier nicht gezeigte Rüttelplatte zählt.

Das Vorderteil des Graders wird vom Vorderrahmen 11 gebildet, der sich über die Vorderachse 12 und die Vorderräder 13 auf dem Boden abstützt. Unter dem Vorderrahmen 11 ist das Arbeitsgerät 14 angeordnet, das aus dem Schar 15, dem Drehwerk 16 und dem Schwenkstuhl 17 besteht. Ein optional vor den Vorderrädern 13 angeordnetes Frontplanierschild 18 wird vom Vorderrahmen 11 getragen.

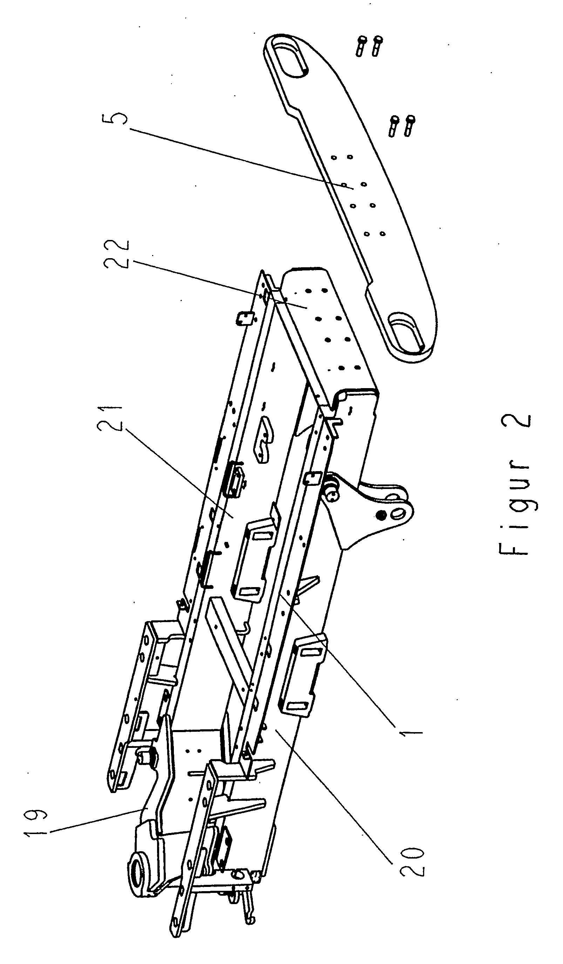

Figur 2 zeigt den Hinterrahmen 1 und die Schlußplatte 5 des Graders nach Figur 1 in Explosivdarstellung. In diesem Fall ist der Hinterrahmen 1 kastenförmig gestaltet, bestehend aus einem Kopfstück 19, einem linken Längsträger 20, einem rechten Längsträger 21 und einem beide Enden der Längsträger 20;21 verbindenden hinteren Querträger 22.

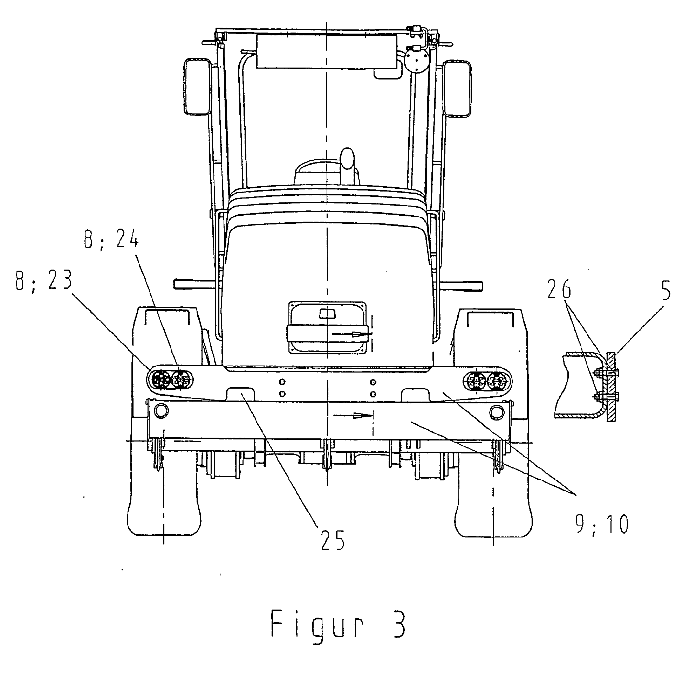

In Figur 3 ist die Rückansicht des Graders nach dem ersten Ausführungsbeispiel der Figuren 1 und 2 dargestellt, der für den Einsatz mit einer hinteren Ausrüstung 10 hohen Gewichts vorgesehen ist. Deshalb hat hier die Schlußplatte 5 eine relativ geringe Wandstärke, um gemeinsam mit einer schweren hinteren Ausrüstung 10, beispielsweise einem Heckaufreißer 9, für eine optimale Achslastverteilung des Graders zu sorgen. Gut zu sehen ist hier auch die in die Schlußplatte 5 integrierte Beleuchtung 8, wobei sich beidseitig im Bereich ihrer äußeren Enden je eine kombinierte Brems-/Blink-/Schlußeuchte 23 und innen daneben je ein Rückfahrscheinwerfer 24 befinden. Zum Durchtritt der Aufreißzylinder für den Heckaufreißer 9 ist die Schlußplatte mit Ausnehmungen 25 ausgestattet. Zur lösbaren Befestigung der Schlußplatte 5 am hinteren Querträger 22 dienen mehrere Schraubverbindungen 26.

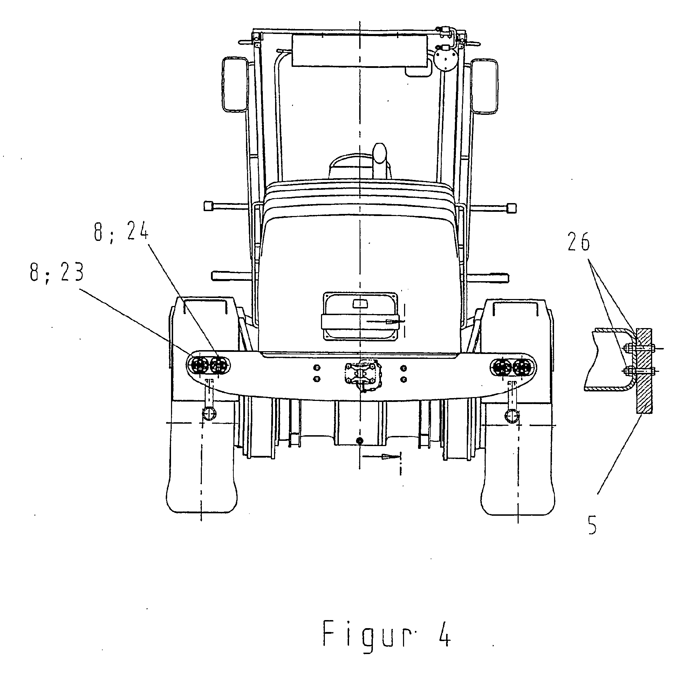

Das zweite Ausführungsbeispiel des erfindungsgemäßen Graders für den Einsatz ohne hintere Ausrüstung 10 zeigt Figur 4, wo die Schlußplatte 5 eine wesentlich größere Wandstärke als im ersten Ausführungsbeispiel hat.

### Bezugszeichenaufstellung

- 1: Hinterrahmen
- 2: Tandemachse
- 3: Motorraum
- 4: Fahrerkabine
- 5: Schlußplatte
- 6: hinteres Gegengewicht
- 7: Stoßfänger
- 8: Beleuchtung
- 9: Heckaufreißer
- 10: hintere Ausrüstung
- 11: Vorderrahmen
- 12: Vorderachse
- 13: Vorderräder
- 14: Arbeitsgerät
- 15: Schar
- 16: Drehwerk
- 17: Schwenkstuhl
- 18: Frontplanierschild
- 19: Kopfstück
- 20: linker Längsträger
- 21 1: rechter Längsträger
- 22: hinterer Querträger
- 23: Brems-/Blink-/Schlußleuchte
- 24: Rückfahrscheinwerfer
- 25: Ausnehmung
- 26: Schraubverbindung

## Patentansprüche

1. Grader mit Hinterrahmen an dessen hinteren Ende die Baugruppen hinteres Gegengewicht (6), Beleuchtung (8), Stoßfänger (7) mit oder ohne hintere Ausrüstung (10) angeordnet sind, wobei
- der Stoßfänger (7) und das hintere Gegengewicht (6) aus einer annähernd vertikal ausgerichteten und sich bis zur gesamten Breite des Graders erstreckenden Schlussplatte (5) besteht,
- die Wandstärke der Schlussplatte (5) derart gewählt ist, dass bei einer hinteren Ausrüstung (10) mit hohem Gewicht die Wandstärke relativ gering ist und bei keiner hinteren Ausrüstung bzw. einer hinteren Ausrüstung (10) mit geringem Gewicht die Wandstärke relativ groß ist, so dass der Grader eine optimale Achslastverteilung aufweist,
- die Schlussplatte (5) in Fahrtrichtung des Graders gesehen das am weitesten hinten angeordnete Teil des Hinterrahmens (1) darstellt,
- die Beleuchtung (8) an der Schlussplatte (5) im Bereich ihrer äußeren Enden angebracht ist.

2. Grader nach Anspruch 1,
**dadurch gekennzeichnet,**
**dass** die Schlussplatte (5) einstückig ausgebildet ist.

3. Grader nach Anspruch 1 oder 2,
**dadurch gekennzeichnet,**
**dass** die hinteren Enden des linken Längsträgers (20) und des rechten Längsträgers (21) mit einem hinteren Querträger (22) verbunden sind.

4. Grader nach Anspruch 1, 2 oder 3,
**dadurch gekennzeichnet,**
**dass** die Schlussplatte (5) am hinteren Querträger (22) lösbar befestigt ist.

## Claims

1. A grader with a rear frame, at the rear end of which are arranged the units comprising the rear counterweight (6), the lighting (8), the bumper (7) with or without rear equipment (10), wherein
- the bumper (7) and the rear counterweight (6) comprise an approximately vertically oriented tail plate (5) extending as far as the entire width of the grader,
- the wall thickness of the tail plate (5) is so selected that with a rear equipment (10) of high weight the wall thickness is relatively small and with no rear equipment or with a rear equipment (10) of low weight the wall thickness is relatively great so that the grader has an optimum axle load distribution,
- the tail plate (5) as viewed in the direction of travel of the grader represents the most rearwardly arranged part of the rear frame (1), and
- the lighting (8) is mounted to the tail plate (5) in the region of the outer ends thereof.

2. A grader according to claim 1 **characterised in that** the tail plate (5) is made in one piece.

3. A grader according to claim 1 or claim 2 **characterised in that** the rear ends of the left-hand longitudinal bearer (20) and the right-hand longitudinal bearer (21) are connected to a rear transverse bearer (22).

4. A grader according to claim 1, claim 2 or claim 3 **characterised in that** the tail plate (5) is releasably fixed to the rear transverse bearer (22).

## Revendications

1. Niveleuse présentant un châssis arrière, sur l'extrémité arrière duquel sont disposés les ensembles : contrepoids arrière (6), éclairage (8), pare-chocs (7) avec ou sans équipement arrière (10), dans laquelle
- le pare-chocs (7) et le contrepoids arrière (6) consistent en une plaque de fermeture (5) orientée approximativement verticalement et s'étendant sur toute la largeur de la niveleuse,
- l'épaisseur de paroi de la plaque de fermeture (5) étant sélectionnée de telle sorte que, pour un équipement arrière (10) avec un poids important, l'épaisseur de paroi est relativement faible et, en l'absence d'équipement arrière ou dans le cas d'un équipement arrière (10) de faible poids, l'épaisseur de paroi est relativement importante, de sorte que la niveleuse présente une répartition de charge d'essieu optimum,
- la plaque de fermeture (5), vue dans la direction de marche de la niveleuse, représente la partie située le plus à l'arrière du châssis arrière (1),
- l'éclairage (8) sur la plaque de fermeture (5) est disposé dans la zone de ses extrémités extérieures.

2. Niveleuse selon la revendication 1,
**caractérisée en ce que**
la plaque de fermeture (5) est conçue d'un seul tenant.

3. Niveleuse selon la revendication 1 ou 2,
**caractérisée en ce que**
les extrémités arrière du longeron gauche (20) et du longeron droite (21) sont raccordées par une traverse arrière (22).

4. Niveleuse selon la revendication 1, 2 ou 3,
**caractérisée en ce que**
la plaque de fermeture (5) est fixée de façon détachable sur la traverse arrière (22).
